Europäisches Patentamt

(19) European Patent Office     (11) Publication number: **0 191 521 B1**

Office européen des brevets

(12) **EUROPEAN PATENT SPECIFICATION**

(45) Date of publication of the patent specification:
21.03.90

(51) Int. Cl.⁴: **G03G 17/00**, G03G 15/09

(21) Application number: 86200129.4

(22) Date of filing: 30.01.86

(54) **Printing device.**

(30) Priority: 06.02.85 NL 8500319

(43) Date of publication of application:
20.08.86 Bulletin 86/34

(45) Publication of the grant of the patent:
21.03.90 Bulletin 90/12

(84) Designated Contracting States:
CH DE FR GB IT LI NL SE

(56) References cited:
GB-A- 1 483 935
GB-A- 2 076 746
US-A- 3 739 087
US-A- 3 816 840
US-A- 3 879 737
US-A- 4 390 887

PATENTS ABSTRACTS OF JAPAN, vol. 9,
no. 100 (M-376) [1823], 2nd May 1985; & JP - A
- 59 224 369 (FUJI XEROX K.K.) 17-12-1984
PATENTS ABSTRACTS OF JAPAN, vol. 7,
no. 257 (M-256) [1402], 1th November 1983; & JP - A
- 58 140 265 (CANON K.K.) 19-08-1983) 19-08-1983

(73) Proprietor: Océ-Nederland B.V., St. Urbanusweg 43,
NL-5914 CC Venlo(NL)

(72) Inventor: van Cooten, Robertus, Burgemeester van
Leentstraat 32, NL-5971 AH Grubbenvorst(NL)
Inventor: Simons, Dick, Pastoor Goossensstraat 9,
NL-5921 CW Venlo(NL)
Inventor: Witteveen, Bontko, Grimmstraat 22,
NL-5924 EC Venlo(NL)
Inventor: Draai, Willem Tjark, Voltairestraat 16,
NL-5924 EH Venlo(NL)
Inventor: van Stiphout, Johannes Gerardus Venantius,
Dr. Timmerslaan 1D, NL-5741 XE Beek en Donk(NL)
Inventor: Huijben, Martinus Johannes,
Kloosterstraat 4 A, NL-5971 BC Grubbenvorst(NL)

(74) Representative: Hanneman, Henri W.A.M. et al,
Océ-Nederland B.V. Patents and Information
Postbus 101, NL-5900 MA Venlo(NL)

## Description

This invention relates to a printing device, comprising a movable image-forming medium, with a support, the surface of which is formed by a dielectric layer, an image-forming station disposed along the trajectory of the image-forming medium and comprising a magnetic roller having an electrically conductive non-magnetic outer sleeve and magnets disposed inside the sleeve, means for supplying electrically conductive toner to a linear zone where the image formation takes place, and a number of electrodes each of which can be actuated by a voltage source and each of which can generate an electric field across the dielectric layer in the image-forming station over part of the zone in which image formation takes place, the electrical field corresponding to an image pattern required to be formed on the image-forming medium, the electrodes being disposed on the movable image forming medium so as to be insulated from one another, being covered by said dielectric layer and extending in the direction of movement of the image-forming medium either over at least the length of the image to be formed or endlessly and being actuable.

A device of this kind is known from US patent specification 3 816 840, more particularly in connection with Figs. 9 and 10. In Figs. 9 and 10, a magnetic developing system constructed from a number of magnets and a non-magnetizable sleeve disposed rotatably therearound, is provided with magnetizable conductive toner. A fixed electrode is disposed opposite the toner brush, and over it a dielectric layer can be transported which is always in contact with the electrode. A dotted toner image is deposited on the dielectric layer by applying short voltage pulses of a high voltage (500 to 1000 volt) between the sleeve and the electrode. The image dots have dimensions which are substantially equivalent to the size of the area of the electrode. By using a large number of such electrodes and actuating them with image-forming signals, a dotted toner image can be obtained image-wise on the dielectric layer.

A disadvantage of this known device is that the image developed in this way has low resolution because recording is possible only dotwise. Also, it is very difficult technically to embody a good contact required between a fixed row of electrodes and the dielectric layer.

US patent specification 3 946 402 discloses a device in which a rotating drum is provided with a dielectric layer. A conventional magnetic developing brush is used to apply a uniform toner layer to the dielectric. The uniform toner layer is fed into an image-forming zone fromed by a magnetic roller provided with a non-magnetic sleeve. A large number of magnetic electrically conductive electrodes in the form of bars are disposed on this sleeve, the electrodes extending line-wise and parallel to the axis of the drum. The electrodes are each connected to a voltage source. If the electrodes are not electrically energized, the magnetic force will pull off the toner from the dielectric layer. By energizing the electrodes with pulses corresponding to the image an electrical field will form across the dielectric and thus fix the toner dotwise to the dielectric layer. Since the electrodes are conductive, they must be insulated from one another.

A disadvantage of this known device is that the conductive toner may form a connection between individual electrodes so that shortcircuiting occurs and the image formation is interfered with. Also, the construction of a row of conductive magnetic electrodes in bar form is very complex and expensive.

Further from JP-A 59 224 369 it is known to use moving stripe electrodes, covered by a dielectric. Every electrode can be connected to an actuable voltage source via leads which are situated inside a drum.

A disadvantage of this is that data must be fed to the electrodes seriatim via a sliding contact.

This means that only a limited printing speed can be achieved.

The object of the invention is to provide a device according to the preamble without this and other disadvantages. This object is attained in a device according to the preamble in that the electrodes are actuable by means of induction electrodes which are placed in register and each of which can be connected to a voltage source, the induction electrodes being in trailing contact with the dielectric layer.

The effect of this is that prints can be produced with high speed and which are longer than equivalent to the circumference of the image-forming medium. Also, the image-forming medium and the associated developing device can be made very compact.

These and other advantages will be apparent from the following description and associated drawings wherein:

Fig. 1 is a drawing of the principle of an electrostatic printer,

Fig. 2 is a schematic representation of an electrostatic layer with a developing brush,

Figs. 3a–3d are schematic representations of the process applied,

Fig. 4 is a schematic representation of an inductive actuating method for the electrode paths, according to the invention,

Fig. 5 is an equivalent circuit diagram of Fig. 4,

Fig. 6 is a section of a device according to the invention, and

Fig. 7 is a top plan view of the section according to Fig. 6.

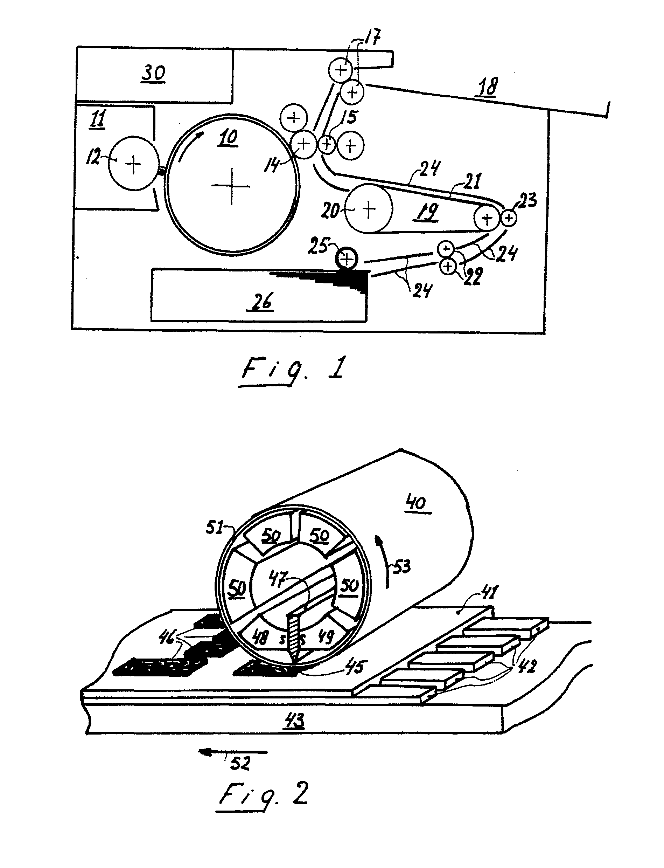

Fig. 1 is a drawing of the principle of an electrostatic printer. An image-forming medium in the form of a rotating drum 10 comprises an electrostatic layer which is built up of a number of actuatable electrodes in and beneath a dielectric layer.

Image-forming station 11 with the magnetic developing roller 12 is filled with magnetically attractable conductive toner. A toner image can be formed on the electrostatic layer by the application of a voltage between the actuatable electrodes on rotating drum 10 and the developing roller 12. This toner image is transferred to a heated rubber-covered roller 14. One sheet of paper is fed to the paper preheating station 19 from the paper stock 26 by means of a roller 25 via guide tracks 24 and rollers 22 and 23. Paper preheating station 19 comprises a belt 21 trained about a heated roller 20. The contact between the sheet and the belt 21 causes the sheet to be heated. The sheet of paper thus preheated is passed through roller 15 and roller 14 and the toner image formed on roller 14 is completely transferred to the sheet of paper. The paper temperature is such that the toner image fuses on the paper. The sheet of paper is fed to the collecting tray 18 via conveyor rollers 17. Unit 30 comprises an electronic circuit which converts the optical information of an original into electrical signals which can be fed to the actuatable electrodes. Electrical signals originating from a computer or data-processor can be converted in unit 30 into signals which can be fed to the actuatable electrodes.

Fig. 2 represents the electrostatic layer with developing brush the electrostatic layer is made up of an insulating support 43, a number of electrically conductive electrode paths 42 and above these a dielectric layer 41. Disposed above the layer is an image-forming station which feeds magnetic electrically conductive toner particles to the image-forming zone 45 between the dielectric layer 41 and the developing roller 40.

Support 43 is made from a flexible insulating material, e.g. Kapton and has a thickness of about 200 μm. A copper layer of a thickness of about 5 μm is disposed on this, small tracks of a width of about 20 μm being etched away therefrom by means of known exposure and etching technics, so that a track pattern is obtained consisting of 60 μm wide electrode paths 42 with 20 μm interstices. Other widths (from 10 μm to 200 μm), thicknesses and interstices (from 5 μm to 100 μm) can also be used.

Each electrode path 42 can be actuated with a control device (hot shown) which can feed voltage to each electrode path 42 via switching elements.

A dielectric layer 41 is disposed over and between the electrode paths 42. A stove enamel from Messrs. Red Spot Paint and Varnish Corporation, type Ted Spot SM 952 R, was used for this layer. A solution of said enamel in an organic solvent is applied over the electrodes, a hard layer forming after heating.

Other materials may also be used to form a dielectric layer, such as barium titanate, aluminium oxide, titanium dioxide, lead titanate, etc.

The electrostatic layer is applied to a metal drum (not shown) and secured thereto by means of a clamp mechanism. In the event of damage a new layer can readily be fitted. The drum is provided with an opening in the form of a slot through which the leads can be taken between a control circuit not shown and the electrode paths 42.

In the case of non-endless electrode paths, the length of the electrode paths 42 must at least be equal to the length of the copy to be printed. To obtain a high printing capacity for the device, the time between two prints must be made as short as possible. This can be achieved by securing the electrostatic layer to a drum whose circumference is only a little larger than the length of the electrode paths 42. The electrode paths preferably each extend over at least 75% of the drum circumference.

Developing roller 40 is provided with a copper sleeve 51 about 50 μm thick rotating in the direction of arrow 53. A number of magnets 50 are disposed inside the sleeve and are intended to transport to the image-forming zone 45 the conductive magnetic toner particles which are applied to the sleeve 51 via means not shown. To obtain an image-forming zone with a sharp boundary a soft-iron knife 47 is disposed inside the sleeve 51 between magnets 48 and 49 which are in contact with the knife by poles of the same sign. The electrostatic layer is taken past the developing roller 40 in the direction of arrow 52. Toner 46 is deposited on the dielectric layer 41 by the application of a voltage between one of the electrode paths 42 and the sleeve 51.

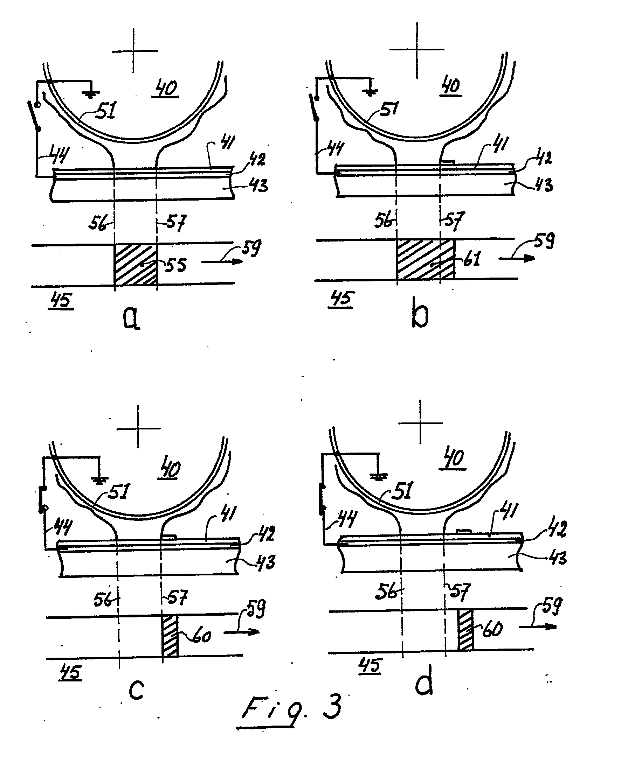

An explanation of how a relatively narrow zone can be developed with a relatively wide toner brush will now be explained with reference to Figs. 3a–3d. The reference numerals in these Figures correspond to those used in Fig. 2 for like parts.

Developing roller 40 is provided with conductive magnetic toner which touches the dielectric layer 41 over an area indicated by broken lines 56 and 57. An electrode path 42 is disposed beneath this layer and can be fed, for example, with a positive electrical voltage with respect to the earthed sleeve 51 of developing rolle 40 via lead 44.

To clarify the image-forming process, Figs. 3a–3d always show a part of the dielectric layer at the developing roller in top plan view 45. The width of the top plan views 45 corresponds to the width of one electrode path. The dielectric layer is conveyed past the developing roller 40 in the direction of arrow 59.

In Fig. 3a, electrode path 42 is at a positive voltage with respect to sleeve 51. A brush current will flow via the conductive toner in the area 55 defined by the brush boundary lines 56 and 57, and as a result a charge will form on the top of the dielectric layer. An opposite mirror charge will thus be induced in the toner particles which are partially in contact with the dielectric layer 41. The electrical force between the dielectric layer 41 and the toner particles will thus become greater than the magnetic force which fixes the toner particles to the magnetic brush and the toner particles are attracted by the dielectric layer 41 in an area defined by lines 56 and 57. Area 55 is developed as a result. In the case of a dielectric layer 41 of a thickness of 1 μm, some 30 volt appear sufficient to obtain good blackening in area 55.

The layer is then conveyed on (Fig. 3b) while the positive voltage is still present on the electrode path 42. Development continues normally so that the developed area 61 is now wider than indicated by the brush boundary lines 56 and 57.

If the electrode path 42 is then (Fig. 3c) electrically connected to the sleeve 51, the charge of the dielectric layer 41 will flow off. The brush current in the area between the brush boundary lines 56 and 57 is no longer present and the magnetic forces of the magnets in the developing brush 40 applied to the toner particles are now greater thant the electrical forces, so that no more toner is deposited. The toner already deposited outside the brush boundary lines 56 and 57 (area 60) is no longer attracted by the developing brush 40 because the magnetic forces applied to those particles have become too small for the purpose owing to the distance. On further conveyance of the layer (Fig. 3d) a small area 60 narrower than the width of the toner brush is provided with toner in this way.

Of importance in the development of these narrow lines is the narrowness of the toner brush at the toner boundary line 57 and the conductivity of the toner.

This conductivity must be so large that the charge applied to the dielectric rapidly flows off when electrode path 42 is connected to the sleeve 51.

If voltage is applied continuously to an electrode path, a long line is developed. Since the development in the width, above an electrode path of a width of 60 μm, is always rather more than equivalent to that electrode path width, and since the interstice between two electrodes is about 20 μm, it is possible to develop a fully back area when a plurality of electrodes next to one another are actuated.

The above-described embodiment is suitable for the production of prints of restricted dimensions (e.g. A4). The electrode paths must always be somewhat longer than the length of the print. When it is desired to make longer prints, it is possible to select an image-forming drum of a larger diameter, but there are limits to this.

A solution to this is obtained if the electrode paths in the dielectric layer around a drum are made endless. To this end, a metal drum is provided with an insulating layer to which a large number of endless electrode paths insulated from one another are applied in known manner. The stove enamel layer is applied over this, in a completely similar manner to that described with reference to Fig. 2.

According to the invention an inductive actuation method is applied, the operation of which will be described with reference to Fig. 4.

In Fig. 4 an electrode 42 is covered with a dielectric layer 41. An induction electrode 64 is also provided with a dielectric layer 65. The dielectric layer 41 can be in contact with the dielectric layer 65. A rotating sleeve 51 partially indicated, of a magnetic brush 40, in which a soft-iron knife 47 is disposed to form a narrow magnetic field, is earthed. The electrode 42 can also be earthed via a "high" resistance 68.

If the induction electrode 64 is now connected, for example, to a positive voltage 67 by means of a switch 66, an electric field will form between this induction electrode 64 and electrode 42. Opposite electrode 64 a negative charge will form in electrode 42. A positive charge will thus form in the electrode 42 opposite to the earthed sleeve 51. If a conductive toner layer is present on this sleeve 51, this toner will be drawn to the dielectric layer 41 by induction of a mirror charge in the toner, by the positive charge on electrode 42. Image formation thus occurs.

If induction electrode 64 is earthed via switch 66, the electric fields will disappear and the magnetic force of the brush will hold the toner on said brush.

Fig. 5 represents an equivalent circuit diagram of the device according to Fig. 4. The capacitors 70 and 71 are connected in series and one side is connected to switch 66 while the other side is earthed. Capacitor 70 represents the capacity which is formed by the induction electrode 64 and the electrode 42. Capacitor 71 represents the capacity formed by the electrode 42 and the earthed sleeve 51 of the developing brush.

The "high" resistance 68 can be connected to the junction of capacitors 70 and 71. When a positive potential 67 is applied to the top plae of capacitor 70, a voltage division will occur over the two capacitors. If the capacitors 70 and 71 are of the same size, half the potential will occur at the junction between the two capacitors. The electric fields in the two capacitors 70 and 71 are then equal. By varying capacitor 70, e.g. by varying the thickness of the dielectric layer 41, it is possible to vary the magnitude of the electric field in capacitor 71, and hence the magnitude of the field between electrode 42 and sleeve 51, the image-forming zone.

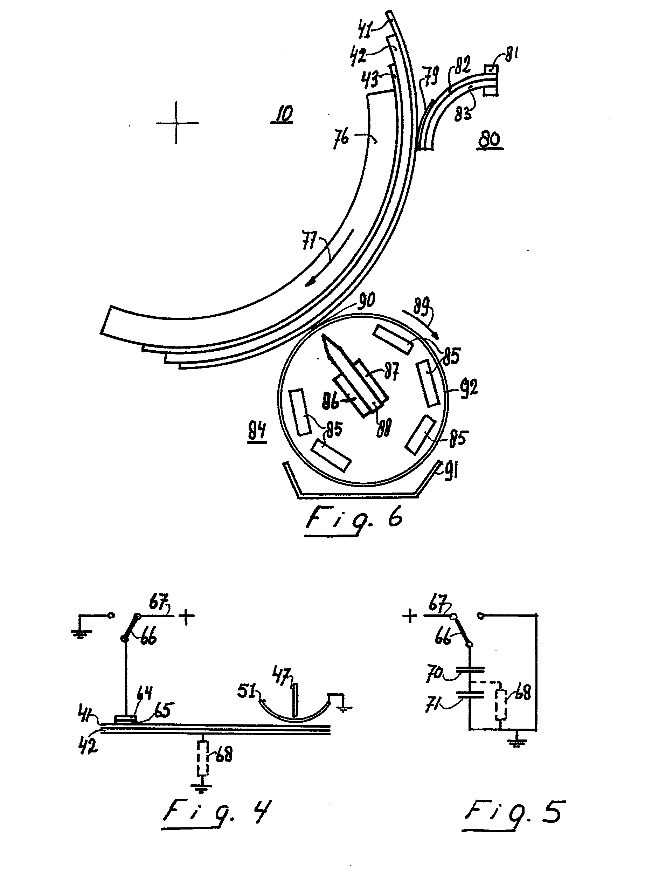

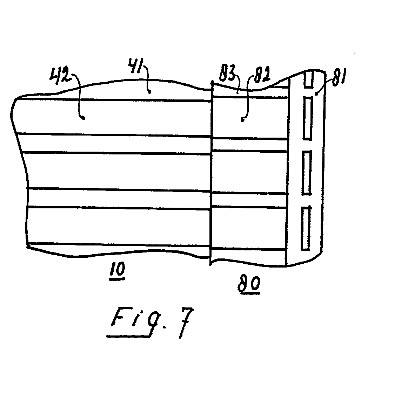

An embodiment of said principle in a device according to the invention will be explained with reference to Figs. 6 and 7.

Fig. 6 prepresents a section through an image-forming medium 10 in the form of a drum 76 rotatable in the direction of arrow 77 and having an insulating layer 43 on which there are disposed a large number of adjacent electrodes 42 which are insulated from one another, extend endlessly in the direction of movement of the drum, and are disposed in and under a dielectric layer 41. Developing device 84 comprises an earthed sleeve 92 which is rotatable in the direction of arrow 89 around an assembly of toner transport magnets 85 and around a soft-iron knife 88 surrounded by two magnets 86 and 87 of the same sign. Conductive magnetic toner is fed from tray 91 to the image-forming zone 90 where a very narrow toner brush is formed.

The soft-iron knife 88 has its pointed end at a distance of about 10 μm from sleeve 92. The sleeve 92 has a thickness of about 50 μm and its outer surface is provided with linear recesses extending parallel to the axis of rotation the recesses extending parallel to the axis of rotation. The recesses, which are about 5 to 10 μm deep and about 20 μm to 200 μm wide, serve to provide a very thin toner layer on sleeve 92 in co-operation with a dispensing knife (not shown).

This avoids any accumulation and widening of the toner brush formed in the image-forming zone 90.

To obtain a toner brush as narrow as possible the thickness of the sleeve 92 is also important. This thickness is preferably between 10 μm and 100 μm.

An optimum compromise between magnetic field dispersal and mechanical strength is obtained with a thickness of about 50 μm.

An induction electrode element 80 comprises a large number of conductive induction electrodes 82 disposed on a flexible insulating strip 83 of Melinex and each induction electrode 82 is connected via block 81 to a control block (not shown). Good contact between the dielectric layer 41 and induction electrodes 82 is obtained by turning the strip by means of block 81. A thin layer of dielectric material 79, such as the stove enamel already referred to, can be disposed over and around the induction electrodes 82 in order to increase the wearing resistance of the induction electrode element 80.

Fig. 7 represents a part of the image-forming element 10 and induction electrode element 80 in top plan view. The induction electrodes 82 are disposed at the same centres as the electrodes 42 on the image-forming element 10. Element 80 is so positioned by means of an adjusting device (not shown) that the electrodes 82 and 42 are in register. The width of an induction electrode 82 is preferably the same as, or somewhat larger than, the width of an electrode 42, in order to obtain the maximum capacity between the two.

The thickness of the dielectric layer 79 is for the same reasons small, about 1 to 5 μm. The thickness of the induction electrode 82 is about 5 μm and the width 60 to 70 μm.

By applying a voltage of about 50 volt to an induction electrode 82 it is possible to deposit sufficient toner in the image-forming zone 90 in the manner described above on dielectric layer 41 to obtain good blackening of the image to be printed. Image forming is interrupted when the induction electrode 82 is again earthed. With the device described above it is possible to obtain prints having a length greater than the circumference of the image-forming element 10. The image-forming element 10 can accordingly be made with a very small diameter of, for example, 5 cm, thus making it possible to obtain a compact imaging device.

Of course the invention is not restricted to the embodiments described. For example, the image-forming medium can first be provided with a uniformly applied layer of toner which is then taken past the image-forming station. If voltage is applied to an electrode path, a brush current will flow and the toner particles will remain fixed to the dielectric layer.

When an electrode path is electrically actuated, the magnetic brush will pull off the toner particles from the layer and discharge them from the image-forming zone via the rotating sleeve. A scraper device can scrape off the discharged toner particles from the sleeve. With the inductive actuating method it is also possible to use a very large number of narrow electrode paths on the image-forming medium while induction electrodes can be used which are many times wider than the electrode paths. Off-line or register problems are greatly reduced in this way.

A man skilled in the art will be able to make all kinds of modifications to the embodiments described which, however, will all come within the scope of the following claims.

**Claims**

1. A printing device, comprising a movable image-forming medium (10), with a support (43), the surface of which is formed by a dielectric layer (41), an image-forming station (11) disposed along the trajectory of the image-forming medium (10) and comprising a magnetic roller (12, 40) having an electrically conductive nonmagnetic outer sleeve (51) and magnets (48, 49, 50) disposed inside the sleeve (51), means for supplying electrically conductive toner to a linear zone (45) where the image formation takes place, and a number of electrodes (42) each of which can be actuated by a voltage source and each of which can generate an electric field across the dielectric layer (41) in the image-forming station (11) over part of the zone (45) in which image formation takes place, the electrical field corresponding to an image pattern required to be formed on the image-forming medium (10), the electrodes (42) being disposed on the movable image forming medium so as to be insulated from one another, being covered by said dielectric layer (41) and extending in the direction of movement (52) of the image-forming medium (10) either over at least the length of the image to be formed or endlessly and being actuable, characterised in that the electrodes (42) are actuable by means of induction electrodes (82) which are placed in register and each of which can be connected to a voltage source, the induction electrodes being in trailing contact with the dielectric layer (41).

2. A device according to claim 1, characterised in that the electrodes (42) each extend over at least 75% of the circumference of the image-forming medium (10).

3. A device according to claim 1 or 2, characterised in that the dielectric layer (41) with the electrodes (42) is disposed on a thin insulating foil which can be removably secured to the support.

4. A device according to any proceeding claim, characterised in that a dielectric layer (79) is disposed over and around the induction electrodes (82).

5. A device according to claim 4, characterised in that the thickness of the dielectric layer (79) is between 1 μm and 5 μm.

6. A device according to any one of the preceding claims, characterised in that the induction electrodes (82) are disposed on an insulating flexible strip (83).

7. A device according to any one of the preceding claims, characterised in that the width of each induction electrode (82) is substantially the same as, or larger than, the width of an electrode (42).

8. A device according to any one of the preceding claims, characterised in that the width of the electrodes (42) is between 10 μm and 200 μm.

9. A device according to claim 8, characterised in that the widths of the electrodes (42) is approximately 60 μm.

10. A device according to any one of the preceding claims, characterised in that the distance between the electrodes (42) is between 5 μm and 100 μm.

11. A device according to claim 10, characterised in that the distance between the electrodes (42) is 20 μm.

12. A device according to any one of the preceding claims, characterised in that a stove enamel is used as dielectric layer (41).

## Patentansprüche

1. Druckvorrichtung mit einem beweglichen Bilderzeugungsmedium (10), das einen Träger (43) aufweist, dessen Oberfläche mit einer dielektrischen Schicht (41) versehen ist, einer längs der Bewegungsbahn des Bilderzeugungsmediums (10) angeordneten Bilderzeugungsstation (11) die eine magnetische Walze (12, 40) umfasst die eine elektrisch leitfähige, nicht magnetische äußere Hülse (51) und im Inneren der Hülse angeordnete Magnete (48, 49, 50) aufweist. Mitteln zum Zuführen von elektrisch leitfähigem Toner zu einer linearen Zone (45), in der die Bilderzeugung stattfindet, und einer Anzahl von Elektroden (42), von denen jede mit Hilfe einer Spannungsquelle aktivierbar ist und jede ein die dielektrische Schicht (41) in der Bilderzeugungsstation (11) durchsetzendes elektrisches Feld in einem Abschnitt der Bilderzeugungs-Zone (45) erzeugen kann, wobei das elektrische Feld einem gewünschten Bildmuster entspricht, das auf dem Bilderzeugungsmedium (10) erzeugt werden soll, und wobei die Elektroden (42) so auf dem beweglichen Bilderzeugungsmedium angordnet sind, daß sie voneinander isoliert und durch die dielektrische Schicht (41) überdeckt sind, sich entweder endlos oder wenigstens über die Länge des zu erzeugenden Bildes in Bewegungsrichtung (52) des Bilderzeugungsmediums (10) erstrecken und aktivierbar sind, dadurch gekennzeichnet, daß die Elektroden (42) durch mit diesen ausgerichtete Induktionselektroden (82) aktivierbar sind, von denen jede mit einer Spannungsquelle verbindbar ist und die in schleppender Berührung mit der dielektrischen Schicht (41) stehen.

2. Druckvorrichtung nach Anspruch 1, dadurch gekennzeichnet, daß die Elektroden (42) sich jeweils über wenigstens 70% des Umfangs des Bilderzeugungsmediums (10) erstrecken.

3. Druckvorrichtung nach Anspruch 1 oder 2, dadurch gekennzeichnet, daß die dielektrische Schicht (41) mit den Elektroden (42) auf einer dünnen isolierenden Folie angeordnet ist, die lösbar an dem Träger befestigbar ist.

4. Druckvorrichtung nach einem der vorstehenden Ansprüche, dadurch gekennzeichnet, daß die Induktionselektroden (82) von einer auf diesen angeordneten dielektrischen Schicht (79) umgeben sind.

5. Druckvorrichtung nach Anspruch 4, dadurch gekennzeichnet, daß die Dicke der dielektrischen Schicht (79) zwischen 1 μm und 5 μm beträgt.

6. Druckvorrichtung nach einem der vorstehenden Ansprüche, dadurch gekennzeichnet, daß die Induktionselektroden (82) auf einem isolierenden, flexiblen Blatt (83) angeordnet sind.

7. Druckvorrichtung nach einem der vorstehenden Ansprüche, dadurch gekennzeichnet, daß die Breite jeder der Induktionselektroden (82) im wesentlichen gleich der Breite einer Elektrode (42) oder größer als diese ist.

8. Druckvorrichtung nach einem der vorstehenden Ansprüche, dadurch gekennzeichnet, daß die Breite der Elektroden (42) zwischen 10 μm und 200 μm beträgt.

9. Druckvorrichtung nach Anspruch 8, dadurch gekennzeichnet, daß die Breite der Elektroden (42) etwa 60 μm beträgt.

10. Druckvorrichtung nach einem der vorstehenden Ansprüche, dadurch gekennzeichnet, daß der Abstand zwischen den Elektroden (42) zwischen 5 μm und 100 μm beträgt.

11. Druckvorrichtung nach Anspruch 10, dadurch gekennzeichnet, daß der Abstand zwischen den Elektroden (42) 20 μm beträgt.

12. Druckvorrichtung nach einem der vorstehenden Ansprüche, dadurch gekennzeichnet, daß die dielektrische Schicht (41) durch ein Einbrennlack gebildet wird.

## Revendications

1. Dispositif d'impression, comportant un milieu mobile de formation d'images (10) avec un support (43), dont la surface est formée par une couche diélectrique (41), un poste (11) de formation d'images disposé sur la trajectoire du milieu de formation d'images (10) et comprenant un cylindre magnétique (12, 40) comportant un manchon extérieur amagnétique, électriquement conducteur (51) et des aimants (48, 49, 50) disposés à l'intérieur du manchon (51), des moyens pour envoyer un toner électriquement conducteur à une zone linéaire (45), dans laquelle la formation de l'image s'effectue, et plusieurs électrodes (42), dont chacune peut être activée par une source de tension et dont chacune peut produire un champ électrique au travers de la couche diélectrique (41) dans le poste (11) de formation d'images, dans une partie de la zone (45), dans laquelle la formation de l'image se produit, le champ électrique correspondant à une configuration d'image devant être formée sur le milieu de formation d'images (10), et les électrodes (42) étant disposées sur le milieu mobile de formation d'images de manière à être isolées les unes par rapport aux autres, en étant recouvertes par ladite couche diélectrique (41) et s'étendant dans la direction de déplacement (52) du milieu de formation d'images (10), soit sur au moins la longueur de l'image devant être formée, soit sans fin et de manière à pouvoir être activée, caractérisé en ce que les électrodes (42) peuvent être activées au moyen d'électrodes à induction (82), qui sont disposées d'une manière alignée et dont chacune peut être raccordée à une source de tension, les électrodes à induction étant en contact, par leur côté arrière, avec la couche diélectrique (41).

2. Dispositif selon la revendication 1, caractérisé en ce que les électrodes (42) s'étendent chacune sur au moins 75% de la circonférence du milieu de formation d'images (10).

3. Dispositif selon la revendication 1 ou 2, caractérisé en ce que la couche diélectrique (41) munie des électrodes (42) est disposée sur une feuille isolante mince, qui peut être fixée de façon amovible au support.

4. Dispositif selon l'une quelconque des revendications précédentes, caractérisé en ce qu'une couche diélectrique (79) est disposée au-dessus et autour des électrodes à induction (82).

5. Dispositif selon la revendication 4, caractérisé en ce que l'épaisseur de la couche diélectrique (79) est comprise entre 1 μm et 5 μm.

6. Dispositif selon l'une quelconque des revendications précédentes, caractérisé en ce que les électrodes à induction (82) sont disposées sur une bande flexible isolante (83).

7. Dispositif selon l'une quelconque des revendications précédentes, caractérisé en ce que la largeur de chaque électrode à induction (82) est sensiblement égale ou supérieure à la largeur d'une électrode (42).

8. Dispositif selon l'une quelconque des revendications précédentes, caractérisé en ce que la largeur des électrodes (42) est comprise entre 10 μm et 200 μm.

9. Dispositif selon la revendication 8, caractérisé en ce que la largeur des électrodes (42) est égale approximativement à 60 μm.

10. Dispositif selon l'une quelconque des revendications précédentes, caractérisé en ce que la distance entre les électrodes (42) est comprise entre 5 μm et 100 μm.

11. Dispositif selon la revendication 10, caractérisé en ce que la distance entre les électrodes (42) est égale à 20 μm.

12. Dispositif selon l'une quelconque des revendications précédentes, caractérisé en ce qu'on utilise un vernis à cuire en tant que couche diélectrique (41).

Fig. 1

Fig. 2

Fig. 3

Fig. 6

Fig. 4

Fig. 5

Fig. 7